(19) Europäisches Patentamt / European Patent Office / Office européen des brevets

(11) **EP 4 310 785 B1**

(12) **EUROPEAN PATENT SPECIFICATION**

(45) Date of publication and mention
of the grant of the patent:
**04.06.2025   Bulletin 2025/23**

(21) Application number: **22913255.0**

(22) Date of filing: **30.06.2022**

(51) International Patent Classification (IPC):
**G06T 7/80** *(2017.01)*

(52) Cooperative Patent Classification (CPC):
**G01V 1/226; G01H 9/004; G01V 1/305; G01V 1/50;**
G01V 13/00; G01V 2210/1429; G01V 2210/161;
Y02A 90/30

(86) International application number:
**PCT/CN2022/102880**

(87) International publication number:
**WO 2023/123966 (06.07.2023 Gazette 2023/27)**

(54) **DEPTH CALIBRATION METHOD AND APPARATUS FOR DOWNHOLE OPTICAL FIBER**

TIEFENKALIBRIERUNGSVERFAHREN UND -VORRICHTUNG FÜR OPTISCHE BOHRLOCHFASER

PROCÉDÉ ET APPAREIL D'ÉTALONNAGE DE PROFONDEUR POUR FIBRE OPTIQUE DE FOND DE TROU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.12.2021   CN 202111648600**

(43) Date of publication of application:
**24.01.2024   Bulletin 2024/04**

(73) Proprietors:
• **China National Petroleum Corporation**
  **Beijing 100007 (CN)**
• **BGP Inc., China National Petroleum Corporation**
  **Hebei 072751 (CN)**

(72) Inventors:
• **LI, Yanpeng**
  **Baoding, Hebei 072751 (CN)**
• **LIU, Congwei**
  **Baoding, Hebei 072751 (CN)**
• **ZHANG, Yanbin**
  **Baoding, Hebei 072751 (CN)**

(74) Representative: **SSM Sandmair**
**Patentanwälte Rechtsanwalt**
**Partnerschaft mbB**
**Joseph-Wild-Straße 20**
**81829 München (DE)**

(56) References cited:
EP-A1- 3 754 082          WO-A1-2020/251554
CN-A- 104 656 142         CN-A- 108 871 620
CN-A- 112 305 616         CN-A- 112 727 447
US-A1- 2019 004 195

• DALEY T M ET AL: "Field testing of modular borehole monitoring with simultaneous distributed acoustic sensing and geophone vertical seismic profiles at Citronelle, Alabama", GEOPHYSICAL PROSPECTING, BLACKWELL SCIENCE, HOBOKEN, USA, vol. 64, no. 5, 2 November 2015 (2015-11-02), pages 1318 - 1334, XP071259385, ISSN: 0016-8025, DOI: 10.1111/1365-2478.12324

## Description

## Field of the Invention

The present disclosure relates to the field of optical fibre sensing technology, in particular to a method and device for calibrating the depth of an optical fibre in a well, a processor and a computer-readable storage medium.

## Background of the Invention

With the continuous development of science and technology, more and more new technologies are constantly applied in various fields of life and production. Since the data acquired by optical fibres has significant advantages such as high density sampling, high temperature and high pressure resistance and whole well section acquisition, the optical fibres are widely used in the field of borehole geophysics.

Reliable formation information can be obtained by directly coupling the optical fibres with the formation. However, in the process of processing the optical fibres into an armoured optical cable, there is a certain redundant length in order to adapt to the stretching of the cable, that is, the length of the optical cable is different from the length of the fibre core therein, and it is necessary to know the actual depth position of each receiving point of optical fibre sensing data when optical fibre sensing is applied in wells. In the prior art, firstly, the wellhead position is taped for depth zero setting in DAS output channels, and then the optical fibre detection tool OTDR (optical time-domain reflectometer) is used to measure the length of whole optical cable, and the length is compared with the length read by the cable counter to obtain the length correction coefficient, so as to calculate the accurate depth position of each optical fibre when the data is output.

However, in the actual application process, the existing depth calibration method is greatly influenced by the accuracy of the optical fibre detection tool OTDR and the counting accuracy of the above-mentioned cable counter, so there is a technical problem of insufficient calculation accuracy, and the actual needs of current technicians cannot be satisfied.

US 2019/004195 A1 relates to a method of calibrating depths of a plurality of seismic receiver channels in a seismic receiver array disposed in a borehole in an earth formation.

## Summary of the Invention

In order to overcome the above technical problems existing in the prior art, embodiments of the present disclosure provide a method for calibrating the depth of an optical fibre in a well, which performs de-noising processing on the actual seismic wave field data acquired by the optical fibre, and compares the existing logging data and the optical fibre seismic wave field data for analysis, so that the depth calibration information of the optical fibre is accurately determined, and the depth calibration accuracy is improved.

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

In order to achieve the above object, an embodiment of the present disclosure provides a method for calibrating the depth of an optical fibre in a well as defined in claim 1.

Preferably, the method further comprises: before determining the downgoing wave first arrival amplitude, optimising the borehole seismic wave field data based on a preset filtering algorithm to obtain an optimised downgoing wave field; and determining the downgoing wave first arrival amplitude based on the optimised downgoing wave field and the first arrival time information.

Preferably, determining the downgoing wave first arrival amplitude based on the first arrival time information and the borehole seismic wave field data comprises: determining a preset short time window based on the first arrival time information; determining specific seismic wave field data within the preset short time window; and determining a downgoing wave first arrival amplitude based on the specific seismic wave field data.

Preferably, determining the amplitude feature point based on the downgoing wave first arrival amplitude comprises: performing a spherical spreading amplitude compensation operation on the downgoing wave first arrival amplitude to obtain a compensated amplitude; generating a relative impedance curve based on the compensated amplitude; acquiring preset logging data; and determining the corresponding optical fibre amplitude feature point based on the preset logging data and the relative impedance curve.

Preferably, the method further comprises: determining a borehole sampling parameter of the optical fibre in the well based on the depth calibration information; performing a depth resampling operation based on the borehole sampling parameter to obtain resampled data; and generating updated depth calibration information based on the resampled data.

Correspondingly, the present disclosure also provides a device for calibrating the depth of an optical fibre in a well, comprising: a seismic wave field data acquisition unit, used for acquiring borehole seismic wave field data based on an optical fibre acoustic wave sensor; a first arrival time determination unit, used for determining first arrival time information based on the borehole seismic wave field data; a downgoing wave first arrival amplitude determination unit, used for determining a downgoing wave first arrival amplitude based on the first arrival time information and the borehole seismic wave field data; a feature point determination unit, used for determining an optical fibre amplitude feature point based on the downgoing wave first arrival amplitude; an optical fibre parameter determination unit, used for determining a wellhead initial position and a receiving point spacing of the optical fibre in the well based on the optical fibre amplitude feature point; and a depth calibration unit, used for determining depth calibration information of the optical fibre in the well based on the wellhead initial position and the receiving point spacing.

Preferably, the device further comprises an optimisation unit, used for: optimising the borehole seismic wave field data based on a preset filtering algorithm to obtain an optimised downgoing wave field; the downgoing wave first arrival amplitude determination unit is further used for determining the downgoing wave first arrival amplitude based on the optimised downgoing wave field and the first arrival time information.

Preferably, the downgoing wave first arrival amplitude determination unit comprises: a time window determination module, used for determining a preset short time window based on the first arrival time information; a data determination module, used for determining specific seismic wave field data within the preset short time window; and a first arrival amplitude determination module, used for determining a downgoing wave first arrival amplitude based on the specific seismic wave field data.

Preferably, the feature point determination unit comprises: a compensation module, used for performing a spherical spreading amplitude compensation operation on the downgoing wave first arrival amplitude to obtain a compensated amplitude; an impedance information generation module, used for generating a relative impedance curve based on the compensated amplitude; a logging data acquisition module, used for acquiring preset logging data; and a feature point generation module, used for determining the corresponding optical fibre amplitude feature point based on the preset logging data and the relative impedance curve.

Preferably, the device further comprises a resampling unit, used for: determining a borehole sampling parameter of the optical fibre in the well based on the depth calibration information; performing a depth resampling operation based on the borehole sampling parameter to obtain resampled data; and generating updated depth calibration information based on the resampled data.

In another aspect, the present disclosure also provides a processor, configured to perform the method for calibrating the depth of an optical fibre in a well provided by the present disclosure.

In another aspect, the present disclosure also provides a computer-readable storage medium, storing a computer program therein, wherein the computer program, when executed by a processor, implements the method for calibrating the depth of an optical fibre in a well provided by the present disclosure.

Through the technical solutions provided by the present disclosure, the present disclosure has at least the following technical effects:
by improving the existing optical fibre depth correction method, de-noising processing is performed on the seismic wave field data acquired by the field optical fibre, and then the wellhead initial position and receiving point spacing of the optical fibre in the well are accurately determined in combination with the existing logging data, so that the depth calibration position of the downhole optical fibre can be accurately determined, and the depth calibration accuracy is improved.

Other features and advantages of embodiments of the present disclosure will be described in detail in the Detailed Description section that follows.

**Brief Description of Drawings**

The accompanying drawings are intended to provide a further understanding of the embodiments of the present disclosure and constitute a part of this specification, and together with the detailed description below, serve to explain, but not to limit, the embodiments of the present disclosure. In the drawings:

FIG. 1 is a specific implementation flowchart of a method for calibrating the depth of an optical fibre in a well according to an embodiment of the present disclosure;
FIG. 2 is a specific implementation flowchart of determining a downgoing wave first arrival amplitude in a method for calibrating the depth of an optical fibre in a well according to an embodiment of the present disclosure;
FIG. 3 is a specific implementation flowchart of determining feature points in a method for calibrating the depth of an optical fibre in a well according to an embodiment of the present disclosure;
FIG. 4 is a schematic diagram of a relative impedance curve in a method for calibrating the depth of an optical fibre in a well according to an embodiment of the present disclosure;
FIG. 5 is a schematic diagram of an acoustic logging velocity curve of a method for calibrating the depth of an optical fibre in a well according to an embodiment of the present disclosure;
FIG. 6 is a schematic diagram of a relative impedance curve after depth calibration in a method for calibrating the depth of an optical fibre in a well according to an embodiment of the present disclosure; and
FIG. 7 is a structural schematic diagram of a device for calibrating the depth of an optical fibre in a well according to an embodiment of the present disclosure.

## Detailed Description of the Embodiments

The specific implementations of the embodiments of the present disclosure will be described in detail with reference to the accompanying drawings. It should be understood that the specific implementations described here are only used to illustrate and explain the embodiments of the present disclosure, and are not used to limit the embodiments of the present disclosure.

The terms "system" and "network" in the embodiments of the present disclosure can be used interchangeably. "plurality of" means two or more, and in view of this, "plurality of" can also be understood as "at least two" in the embodiments of the present disclosure. " and/or", which describes the association relationship of associated objects, indicates that three relationships can exist, for example, A and/or B, which can mean that A exists alone, A and B exist together, and B exists alone. In addition, the character "/", unless otherwise specified, generally indicates that the associated objects before and after the "/" are in an "OR" relationship. In addition, it should be understood that in the description of the embodiments of the present disclosure, words such as "first" and "second" are only used for the purpose of distinguishing descriptions, and cannot be understood as indicating or implying relative importance, nor can they be understood as indicating or implying the order.

The background of the present disclosure will be first described below.

When the formation is observed, seismic wave field and other data of the formation are acquired by disposing an optical fibre in a well, connecting the optical fibre to a DAS (distributed acoustic sensor), and collecting information of the optical fibre by the DAS. However, in the actual application process, the prior art cannot accurately detect the exact position of the optical fibre in the well, thereby causing great trouble for the subsequent analysis of the optical fibre sensing data.

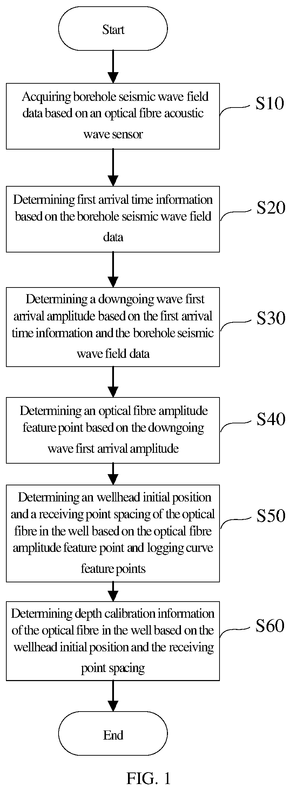

In order to solve the above technical problem, referring to FIG. 1, an embodiment of the present disclosure provides a method for calibrating the depth of an optical fibre in a well, comprising:

> S10) acquiring borehole seismic wave field data based on an optical fibre acoustic wave sensor;
> S20) determining first arrival time information based on the borehole seismic wave field data;
> S30) determining a downgoing wave first arrival amplitude based on the first arrival time information and the borehole seismic wave field data;
> S40) determining an optical fibre amplitude feature point based on the downgoing wave first arrival amplitude;
> S50) determining a wellhead initial position and a receiving point spacing of the optical fibre in the well based on the optical fibre amplitude feature point and logging curve feature points; and
> S60) determining depth calibration information of the optical fibre in the well based on the wellhead initial position and the receiving point spacing.

In one possible implementation, borehole seismic wave field data is first acquired by excitation on the ground or in the well with an explosive source or an artificial vibroseis, and then the borehole seismic wave field data is collected by the optical fibre. At this time, first arrival time information is determined according to the borehole seismic wave field data, the first arrival time information can be obtained by a preset first arrival picking method, which includes, but is not limited to, a maximum energy method, a short-term average/long-term average method, a cross-correlation method, a phase tracking method, and the like. At this time, the downgoing wave first arrival amplitude can be determined based on the first arrival time information and the borehole seismic wave field data.

However, in the actual application process, there is a lot of noise in the borehole seismic wave field data that is initially acquired, and therefore, in order to improve the accuracy of subsequent processing, it is necessary to optimise the borehole seismic wave field data.

In the embodiment of the present disclosure, the method further comprises: before determining the downgoing wave first arrival amplitude, optimising the borehole seismic wave field data based on a preset filtering algorithm to obtain an optimised downgoing wave field; and determining the downgoing wave first arrival amplitude based on the optimised downgoing wave field and the first arrival time information.

After the above borehole seismic wave field data is acquired and before the downgoing wave first arrival amplitude is determined, the borehole seismic wave field data can be optimised by methods such as a median filtering method or a mean filtering method, so as to remove upgoing waves in the borehole seismic wave field data, eliminate the interference effects of upgoing waves in the original borehole seismic wave field data, and improve the accuracy of subsequent data processing, and at this time, the downgoing wave first arrival amplitude can be determined based on the optimised information and the acquired first arrival time information.

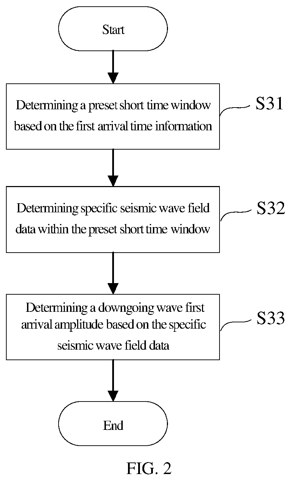

Referring to FIG. 2, in an embodiment of the present disclosure, determining a downgoing wave first arrival amplitude based on the first arrival time information and the borehole seismic wave field data comprises:

> S31) determining a preset short time window based on the first arrival time information;
> S32) determining specific seismic wave field data within the preset short time window; and
> S33) determining a downgoing wave first arrival amplitude based on the specific seismic wave field data.

In one possible implementation, after the first arrival time information is acquired, a preset short time window is determined according to the first arrival time information, the preset short time window can be a dominant period in the first arrival time information or a time window having a length of 20-50 ms, and corresponding specific seismic wave field data is extracted within the preset short time window, a downgoing wave first arrival amplitude is determined according to the specific seismic wave field data, a root mean square amplitude or a maximum amplitude of the specific seismic wave field data can be determined as the downgoing wave first arrival amplitude information $A_i$, wherein i is a corresponding channel number for different channels in the well, and each channel has a corresponding first arrival amplitude. At this time, the optical fibre amplitude feature point is further determined according to the amplitude information.

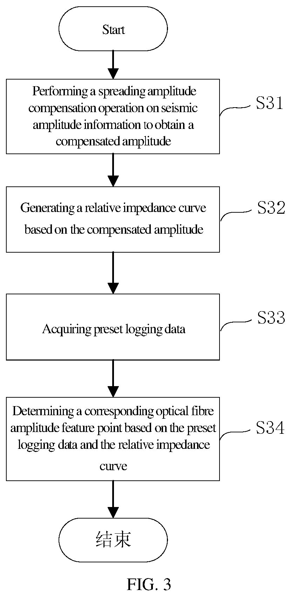

Referring to FIG. 3, in an embodiment of the present disclosure, determining an optical fibre amplitude feature point based on the downgoing wave first arrival amplitude comprises:

S41) performing a spherical spreading amplitude compensation operation on the downgoing wave first arrival amplitude to obtain a compensated amplitude;
S42) generating a relative impedance curve based on the compensated amplitude;
S43) acquiring preset logging data; and
S44) determining corresponding optical fibre amplitude feature points based on the preset logging data and the relative impedance curve.

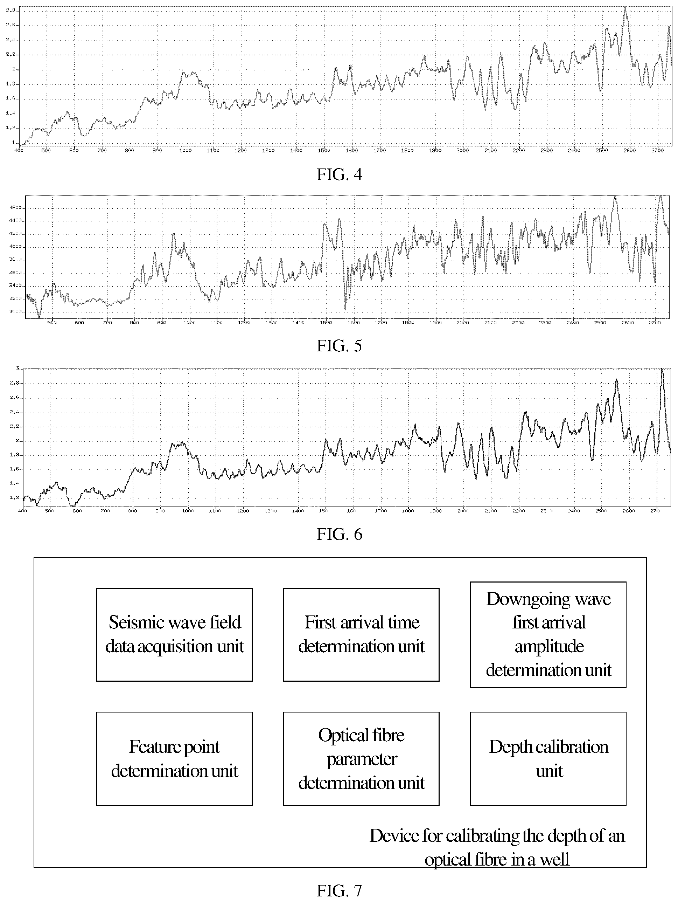

In one possible implementation, in order to eliminate the influence caused by the seismic waves on the seismic amplitude information during propagation, a spherical spreading amplitude compensation operation is first performed on the downgoing wave first arrival amplitude of the optical fibre seismic wave field to eliminate the influence of amplitude variation caused by spherical spreading, and obtain the compensated information. The relative impedance curve is then obtained by reciprocal calculation based on the compensated information, the relative impedance curve is the relative impedance Ir, referring to FIG. 4, at this time, preset logging data is acquired, the preset logging data is an acoustic logging velocity curve, referring to FIG. 5, the preset logging data can include, but is not limited to, parameters such as velocity, density, gamma and impedance, and velocity Vel, density Den, gamma Gr, or impedance Imp of the corresponding well section can be calculated from the existing logging data, at this time, the above preset logging data is compared with the obtained relative impedance curve to determine the corresponding at least one optical fibre amplitude feature point. The feature points can be curve abrupt change points, which physically correspond to formation abrupt change points, for example, corresponding to channel numbers i1 and i2 on the Ir curve and corresponding to depths D1 and D2 on the logging curve.

At this time, the wellhead initial position and receiving point spacing of the optical fibre in the well are determined according to the optical fibre amplitude feature points. For example, in the embodiment of the present disclosure, the initial position i0 and the receiving point spacing $\Delta Z$ of the optical fibre in the well can be determined by the following calculation rules respectively:

$$\Delta Z = (D2-D1)/(i2-i1);$$

$$i0 = (i1*D2-i2*D1)/(D2-D1);$$

at this time, the depth calibration information of the optical fibre in the well can be determined according to the wellhead initial position and the receiving point spacing, for example, the accurate downhole depth calibration information of the optical fibre in the well can be determined by performing depth resampling on the seismic channel below the depth zero point with $\Delta Z$ according to the initial position i0 and the receiving point spacing $\Delta Z$ obtained by calculation. FIG. 6 shows a relative impedance curve after depth calibration, and it can be seen that the relative impedance curve corresponds well to the acoustic logging velocity curve in terms of feature points.

In the embodiment of the present disclosure, the existing logging data and the borehole seismic wave field data detected by the optical fibre are analysed, and the borehole seismic wave field data is optimised, so that accurate seismic wave field data is obtained, and then accurate optical fibre depth calibration information is further obtained, which provides accurate data support for subsequent analysis of data collected through the optical fibre, and satisfies the actual demands of technicians.

In order to further improve the accuracy of the data, in the embodiment of the present disclosure, the method further comprises: determining a borehole sampling parameter of the optical fibre in the well based on the depth calibration information; and performing a depth resampling operation based on the borehole sampling parameter to obtain resampled data.

For example, after the depth calibration information is determined for the first time, the borehole sampling parameter of the optical fibre in the well can be determined again according to the depth calibration information, a depth resampling operation is performed according to the well sampling parameter to obtain resampled data, the data processing process is performed according to the resampled data to obtain more accurate optical fibre depth calibration information, and the depth calibration information acquired for the first time is updated based on the more accurate optical fibre depth calibration information.

In the embodiment of the present disclosure, by repeating sampling for a plurality of times and comparing the feature points, the accuracy of data sampling and data analysis can be further improved, and the technical problem of large deviation existing in single data sampling and analysis can be effectively avoided, and thus the accuracy of data analysis can be further improved.

A device for calibrating the depth of an optical fibre in a well according to an embodiment of the present disclosure will now be described with reference to the accompanying drawings.

Referring to FIG. 7, based on the same inventive concept, embodiments of the present disclosure provide a device for calibrating the depth of an optical fibre in a well, comprising: a seismic wave field data acquisition unit, used for acquiring borehole seismic wave field data based on an optical fibre acoustic wave sensor; a first arrival time determination unit, used for determining first arrival time information based on the borehole seismic wave field data; a downgoing wave first arrival amplitude determination unit, used for determining a downgoing wave first arrival amplitude based on the first arrival time information and the borehole seismic wave field data; a feature point determination unit, used for determining an optical fibre amplitude feature point based on the downgoing wave first arrival amplitude; an optical fibre parameter determination unit, used for determining a wellhead initial position and a receiving point spacing of the optical fibre in the well based on the optical fibre amplitude feature point; and a depth calibration unit, used for determining depth calibration information of the optical fibre in the well based on the wellhead initial position and the receiving point spacing.

In an embodiment of the present disclosure, the device further comprises an optimisation unit, used for optimising the borehole seismic wave field data based on a preset filtering algorithm to obtain an optimised downgoing wave field; the downgoing wave first arrival amplitude determination unit is further used for determining the downgoing wave first arrival amplitude based on the optimised downgoing wave field and the first arrival time information.

In an embodiment of the present disclosure, the downgoing wave first arrival amplitude determination unit comprises a time window determination module, used for determining a preset short time window based on the first arrival time information; a data determination module, used for determining specific seismic wave field data within the preset short time window; and a first arrival amplitude determination module, used for determining a downgoing wave first arrival amplitude based on the specific seismic wave field data.

In an embodiment of the present disclosure, the feature point determination unit comprises a compensation module, used for performing a spherical spreading amplitude compensation operation on the downgoing wave first arrival amplitude to obtain compensated information; an impedance information generation module, used for generating a relative impedance curve based on the compensated amplitude; a logging data acquisition module, used for acquiring preset logging data; and a feature point generation module, used for determining corresponding optical fibre amplitude feature points based on the preset logging data and the relative impedance curve.

In an embodiment of the present disclosure, the device further comprises a resampling unit, used for determining a borehole sampling parameter of the optical fibre in the well based on the depth calibration information; performing a depth resampling operation based on the borehole sampling parameter to obtain resampled data; and generating updated depth calibration information based on the resampled data.

Further, embodiments of the present disclosure also provide a processor configured to perform the method for calibrating the depth of an optical fibre in a well according to the present disclosure.

Further, embodiments of the present disclosure also provide a computer-readable storage medium, storing a computer program therein, wherein the computer program, when executed by a processor, implements the method for calibrating the depth of an optical fibre in a well according to the present disclosure.

Optional implementations of embodiments of the present disclosure are described in detail above in conjunction with the accompanying drawings, however, the embodiments of the present disclosure are not limited to the specific details in the above implementations, and many simple variations can be made to the technical solutions of the embodiments of the present disclosure within the scope of the technical idea of the embodiments of the present disclosure, and these simple variations all belong to the protection scope of the embodiments of the present disclosure.

It needs to be further noted that the various specific features described in the above detailed description can be combined in any suitable manner without contradiction. In order to avoid unnecessary repetition, embodiments of the present disclosure will not explain any possible combinations.

Those skilled in the art will appreciate that all or part of the steps in the method for realising the embodiments described above may be performed by instructing related hardware through a program, the program is stored in a storage medium and includes instructions for causing a single-chip microcomputer, chip or processor to execute all or part of the steps of the method according to the various embodiments of the present application. The aforementioned storage medium includes a USB flash disk, a mobile hard disk, a read-only memory (ROM), a random access memory (RAM), a magnetic disk or an optical disk and other media that can store program codes.

In addition, various different implementations of the embodiments of the present disclosure can also be arbitrarily combined, as long as they do not violate the embodiments of the present disclosure, which should also be considered as the content disclosed in the embodiments of the present disclosure. The present invention is defined by the appended claims.

**Claims**

1.  A computer implemented

    method for calibrating the depth of an optical fibre in a well, **characterized by** comprising receiving (S10) borehole seismic wave field data acquired based on an optical fibre acoustic wave sensor;
    determining (S20) first arrival time information based on the borehole seismic wave field data;
    determining (S30) a downgoing wave first arrival amplitude based on the first arrival time information and the borehole seismic wave field data;
    determining (S40) an optical fibre amplitude feature point based on the downgoing wave first arrival amplitude;
    determining (S50) a wellhead initial position and a receiving point spacing of the optical fibre in the well based on the optical fibre amplitude feature point and logging curve feature points; and
    determining (S60) depth calibration information of the optical fibre in the well based on the wellhead initial position and the receiving point spacing.

2.  The method according to claim 1, **characterized by** further comprising:

    before determining the downgoing wave first arrival amplitude, optimising the borehole seismic wave field data based on a preset filtering algorithm to obtain an optimised downgoing wave field; and
    determining the downgoing wave first arrival amplitude based on the optimised downgoing wave field and the first arrival time information.

3.  The method according to claim 1, **characterized in that** determining the downgoing wave first arrival amplitude based on the first arrival time information and the borehole seismic wave field data comprises:

    determining (S31) a preset short time window based on the first arrival time information;
    determining (S32) specific seismic wave field data within the preset short time window; and
    determining (S33) the downgoing wave first arrival amplitude based on the specific seismic wave field data.

4.  The method according to claim 1, **characterized in that** determining the optical fibre amplitude feature point based on the downgoing wave first arrival amplitude comprises:

    performing (S41) a spherical spreading amplitude compensation operation on the downgoing wave first arrival amplitude to obtain a compensated amplitude;
    generating (S42) a relative impedance curve based on the compensated amplitude;
    acquiring (S43) preset logging data; and
    determining (S44) the corresponding optical fibre amplitude feature point based on the preset logging data and the relative impedance curve.

5.  The method according to claim 1, **characterized by** further comprising:

    determining a borehole sampling parameter of the optical fibre in the well based on the depth calibration information;
    performing a depth resampling operation based on the borehole sampling parameter to obtain resampled data; and
    generating updated depth calibration information based on the resampled data.

6.  A device for calibrating the depth of an optical fibre in a well, **characterized by** comprising:

    a seismic wave field data acquisition unit, used for acquiring borehole seismic wave field data based on an optical fibre acoustic wave sensor;
    a first arrival time determination unit, used for determining first arrival time information based on the borehole seismic wave field data;
    a downgoing wave first arrival amplitude determination unit, used for determining a downgoing wave first arrival amplitude based on the first arrival time information and the borehole seismic wave field data;
    a feature point determination unit, used for determining an optical fibre amplitude feature point based on the downgoing wave first arrival amplitude;
    an optical fibre parameter determination unit, used for determining a wellhead initial position and a receiving point spacing of the optical fibre in the well based on the optical fibre amplitude feature point and logging curve feature points; and
    a depth calibration unit, used for determining depth calibration information of the optical fibre in the well based on the wellhead initial position and the receiving point spacing.

7.  The device according to claim 6, **characterized by** further comprising an optimisation unit, used for:

optimising the borehole seismic wave field data based on a preset filtering algorithm to obtain an optimised downgoing wave field; the downgoing wave first arrival amplitude determination unit is further used for determining the downgoing wave first arrival amplitude based on the optimised downgoing wave field and the first arrival time information.

8. The device according to claim 6, **characterized in that** the downgoing wave first arrival amplitude determination unit comprises:

a time window determination module, used for determining a preset short time window based on the first arrival time information; a data determination module, used for determining specific seismic wave field data within the preset short time window; and a first arrival amplitude determination module, used for determining a downgoing wave first arrival amplitude based on the specific seismic wave field data.

9. The device according to claim 6, **characterized in that** the feature point determination unit comprises:

a compensation module, used for performing a spherical spreading amplitude compensation operation on the downgoing wave first arrival amplitude to obtain a compensated amplitude; an impedance information generation module, used for generating a relative impedance curve based on the compensated amplitude; a logging data acquisition module, used for acquiring preset logging data; and a feature point generation module, used for determining a corresponding optical fibre amplitude feature point based on the preset logging data and the relative impedance curve.

10. The device according to claim 6, **characterized by** further comprising a resampling unit, used for:

determining a borehole sampling parameter of the optical fibre in the well based on the depth calibration information; performing a depth resampling operation based on the borehole sampling parameter to obtain resampled data; and generating updated depth calibration information based on the resampled data.

11. A processor, **characterized by** being configured to perform the method for calibrating the depth of an optical fibre in a well according to any one of claims 1-5.

12. A computer-readable storage medium storing a computer program, **characterized in that** the computer program, when executed by a processor, implements the method for calibrating the depth of an optical fibre in a well according to any one of claims 1-5.

**Patentansprüche**

1. Ein computerimplementiertes Verfahren zum Kalibrieren der Tiefe eines Lichtwellenleiters in einem Bohrloch, **dadurch gekennzeichnet, dass** es umfasst:

das Empfangen (S10) von seismischen Bohrlochwellenfelddaten, die auf der Grundlage eines akustischen Wellenleitersensors erfasst werden; das Bestimmen (S20) von Informationen über die erste Ankunftszeit auf der Grundlage der seismischen Bohrlochwellenfelddaten; das Bestimmen (S30) einer ersten Ankunftsamplitude einer absteigenden Welle auf der Grundlage der ersten Ankunftszeitinformation und der seismischen Bohrlochwellenfelddaten; das Bestimmen (S40) eines Lichtwellenleiter-Amplitudenmerkmalspunkts auf der Grundlage der ersten Ankunftsamplitude der absteigenden Welle; das Bestimmen (S50) einer Bohrlochkopf-Ausgangsposition und eines Empfangspunktabstands des Lichtwellenleiters im Bohrloch auf der Grundlage des Lichtwellenleiter-Amplitudenmerkmalspunkts und von Protokollkurvenmerkmalspunkten; und das Bestimmen (S60) von Tiefenkalibrierungsinformationen des Lichtwellenleiters in dem Bohrloch basierend auf der Anfangsposition des Bohrlochkopfes und dem Abstand der Empfangspunkte.

2. Das Verfahren gemäß Anspruch 1, **dadurch gekennzeichnet, dass** es ferner umfasst:

vor dem Bestimmen der Amplitude des ersten Eintreffens der abwärtslaufenden Welle, das Optimieren der seismischen Bohrlochwellenfelddaten basierend auf einem voreingestellten Filteralgorithmus, um ein optimiertes abwärtslaufendes Wellenfeld zu erhalten; und das Bestimmen der ersten Ankunftsamplitude der abwärtslaufenden Welle auf der Grundlage des optimierten Feldes der abwärtslaufenden Welle und der Information über die erste Ankunftszeit.

**3.** Das Verfahren gemäß Anspruch 1, **dadurch gekennzeichnet, dass** das Bestimmen der ersten Ankunftsamplitude der abwärtslaufenden Welle auf der Grundlage der Information über die erste Ankunftszeit und der Daten des seismischen Bohrlochwellenfeldes umfasst:

das Bestimmen (S31) eines voreingestellten kurzen Zeitfensters auf der Grundlage der ersten Ankunftszeitinformation;
das Bestimmen (S32) spezifischer seismischer Wellenfelddaten innerhalb des voreingestellten kurzen Zeitfensters; und
das Bestimmen (S33) der ersten Ankunftsamplitude der absteigenden Welle auf der Grundlage der spezifischen seismischen Wellenfelddaten.

**4.** Das Verfahren gemäß Anspruch 1, **dadurch gekennzeichnet, dass** das Bestimmen des Amplitudenmerkmalspunkts des Lichtwellenleiters auf der Grundlage der ersten Ankunftsamplitude der absteigenden Welle Folgendes umfasst:

das Durchführen (S41) eines sphärischen Amplituden-Ausbreitungsausgleichsvorgangs an der ersten Ankunftsamplitude der absteigenden Welle, um eine ausgeglichene Amplitude zu erhalten;
das Erzeugen (S42) einer relativen Impedanzkurve auf der Grundlage der ausgeglichenen Amplitude;
das Erfassen (S43) voreingestellter Protokollierungsdaten; und
das Bestimmen (S44) des entsprechenden Amplitudenmerkmalspunkts des Lichtwellenleiters auf der Grundlage der voreingestellten Protokollierungsdaten und der relativen Impedanzkurve.

**5.** Das Verfahren gemäß Anspruch 1, **dadurch gekennzeichnet, dass** es ferner umfasst:

das Bestimmen eines Bohrloch-Probenahmeparameters des Lichtwellenleiters in dem Bohrloch auf der Grundlage der Tiefenkalibrierungsinformationen;
das Durchführen eines Tiefen-Resampling-Vorgangs auf der Grundlage des Bohrloch-Probenahmeparameters, um resampelte Daten zu erhalten; und
das Erzeugen aktualisierter Tiefenkalibrierungsinformationen auf der Grundlage der resampelten Daten.

**6.** Eine Vorrichtung zum Kalibrieren der Tiefe eines Lichtwellenleiters in einem Bohrloch, **dadurch gekennzeichnet, dass** sie umfasst:

eine Datenerfassungseinheit für seismische Wellenfelder, die zum Erfassen von seismischen Bohrlochwellenfelddaten auf der Grundlage eines akustischen Lichtwellenleitersensors verwendet wird;
eine erste Ankunftszeitbestimmungseinheit, die zum Bestimmen von ersten Ankunftszeitinformationen auf der Grundlage der seismischen Bohrlochwellenfelddaten verwendet wird;
eine Bestimmungseinheit für die erste Ankunftsamplitude einer absteigenden Welle, die zum Bestimmen einer ersten Ankunftsamplitude einer absteigenden Welle auf der Grundlage der ersten Ankunftszeitinformationen und der seismischen Bohrlochwellenfelddaten verwendet wird;
eine Merkmalspunktbestimmungseinheit, die zur Bestimmung eines Lichtwellenleiter-Amplitudenmerkmalspunkts auf der Grundlage der ersten Ankunftsamplitude der absteigenden Welle verwendet wird;
eine Lichtwellenleiter-Parameterbestimmungseinheit, die zur Bestimmung einer Bohrlochkopf-Ausgangsposition und eines Empfangspunktabstands des Lichtwellenleiters im Bohrloch auf der Grundlage des Lichtwellenleiter-Amplitudenmerkmalspunkts und der Protokollkurvenmerkmalspunkte verwendet wird; und
eine Tiefenkalibrierungseinheit, die zur Bestimmung von Tiefenkalibrierungsinformationen des Lichtwellenleiters im Bohrloch auf der Grundlage der Bohrlochkopf-Ausgangsposition und des Empfangspunktabstands verwendet wird.

**7.** Die Vorrichtung nach Anspruch 6, **dadurch gekennzeichnet, dass** sie ferner eine Optimierungseinheit umfasst, die verwendet wird für:

das Optimieren der seismischen Bohrlochwellenfelddaten auf der Grundlage eines voreingestellten Filteralgorithmus, um ein optimiertes abwärtsgehendes Wellenfeld zu erhalten;
die Bestimmungseinheit für die erste Ankunftsamplitude der abwärtsgehenden Welle wird ferner verwendet, um die erste Ankunftsamplitude der abwärtsgehenden Welle auf der Grundlage des optimierten abwärtsgehenden Wellenfeldes und der Information über die erste Ankunftszeit zu bestimmen.

**8.** Die Vorrichtung nach Anspruch 6, **dadurch gekennzeichnet, dass** die Bestimmungseinheit für die erste Ankunftsamplitude der absteigenden Welle Folgendes umfasst:

ein Zeitfensterbestimmungsmodul, das zur Bestimmung eines voreingestellten kurzen Zeitfensters auf der Grundlage der ersten Ankunftszeitinformationen verwendet wird;

ein Datenbestimmungsmodul, das zur Bestimmung spezifischer seismischer Wellenfelddaten innerhalb des voreingestellten kurzen Zeitfensters verwendet wird; und

ein Bestimmungsmodul für die erste Ankunftsamplitude, das zur Bestimmung einer ersten Ankunftsamplitude der absteigenden Welle auf der Grundlage der spezifischen seismischen Wellenfelddaten verwendet wird.

9. Die Vorrichtung nach Anspruch 6, **dadurch gekennzeichnet, dass** die Merkmalspunktbestimmungseinheit Folgendes umfasst:

ein Kompensationsmodul, das zur Durchführung einer sphärischen Verteilungs-Amplituden-Kompensationsoperation an der ersten Ankunftsamplitude der absteigenden Welle verwendet wird, um eine kompensierte Amplitude zu erhalten;

ein Impedanzinformationserzeugungsmodul, das zur Erzeugung einer relativen Impedanzkurve auf der Grundlage der kompensierten Amplitude verwendet wird;

ein Protokollierungsdatenerfassungsmodul, das zur Erfassung voreingestellter Protokollierungsdaten verwendet wird; und

ein Merkmalspunkt-Erzeugungsmodul, das zur Bestimmung eines entsprechenden Lichtwellenleiter-Amplitudenmerkmalspunkts auf der Grundlage der voreingestellten Protokollierungsdaten und der relativen Impedanzkurve verwendet wird.

10. Die Vorrichtung nach Anspruch 6, **dadurch gekennzeichnet, dass** sie ferner eine Wiederabtasteinheit umfasst, die verwendet wird, um:

einen Bohrloch-Probenahmeparameter des Lichtwellenleiters in dem Bohrloch auf der Grundlage der Tiefenkalibrierungsinformationen zu bestimmen;

einen Tiefen-Wiederabtastvorgang auf der Grundlage des Bohrloch-Probenahmeparameters durchzuführen, um wiederabgetastete Daten zu erhalten; und

aktualisierte Tiefenkalibrierungsinformationen auf der Grundlage der neu abgetasteten Daten zu erzeugen.

11. Ein Prozessor, **dadurch gekennzeichnet, dass** er dazu eingerichtet ist, das Verfahren zum Kalibrieren der Tiefe eines Lichtwellenleiters in einem Bohrloch gemäß einem der Ansprüche 1 bis 5 auszuführen.

12. Ein computerlesbares Speichermedium, das ein Computerprogramm speichert, **dadurch gekenn-** **zeichnet, dass** das Computerprogramm, wenn es von einem Prozessor ausgeführt wird, das Verfahren zum Kalibrieren der Tiefe eines Lichtwellenleiters in einem Bohrloch gemäß einem der Ansprüche 1 bis 5 implementiert.

**Revendications**

1. Procédé mis en œuvre par ordinateur pour étalonner la profondeur d'une fibre optique dans un puits, **caractérisé en ce qu'**il comprend :

la réception (S10) de données de champ d'ondes sismiques de trou de forage acquises sur la base d'un capteur d'ondes acoustiques de fibre optique ;

la détermination (S20) des premières informations de temps d'arrivée sur la base des données de champ d'ondes sismiques de trou de forage ;

la détermination (S30) d'une première amplitude d'arrivée d'onde descendante sur la base des premières informations de temps d'arrivée et des données de champ d'ondes sismiques de trou de forage ;

la détermination (S40) d'un point caractéristique d'amplitude de fibre optique sur la base de la première amplitude d'arrivé d'onde descendante ;

la détermination (S50) d'une position initiale de tête de puits et d'un espacement de point de réception de la fibre optique dans le puits sur la base du point caractéristique d'amplitude de fibre optique et de points caractéristiques de courbe de diagraphie ; et

la détermination (S60) des informations d'étalonnage de profondeur de la fibre optique dans le puits sur la base de la position initiale de tête de puits et de l'espacement de point de réception.

2. Procédé selon la revendication 1, **caractérisé en ce qu'**il comprend en outre :

avant la détermination de la première amplitude d'arrivée d'onde descendante, l'optimisation des données de champ d'ondes sismiques de trou de forage sur la base d'un algorithme de filtrage prédéfini afin d'obtenir un champ d'ondes descendantes optimisé ; et

la détermination de la première amplitude d'arrivée d'onde descendante sur la base du champ d'ondes descendantes optimisé et des premières informations de temps d'arrivée.

3. Procédé selon la revendication 1, **caractérisé en ce que** la détermination de la première amplitude d'arrivée d'onde descendante sur la base des premières informations de temps d'arrivée et des données de champ d'ondes sismiques de trou de forage comprend :

la détermination (S31) d'une fenêtre de temps courte prédéfinie sur la base des premières informations de temps d'arrivée ;
la détermination (S32) de données de champ d'ondes sismiques spécifiques dans la fenêtre de temps courte prédéfinie ; et
la détermination (S33) de la première amplitude d'arrivée d'onde descendante sur la base des données de champ d'ondes sismiques spécifiques.

4. Procédé selon la revendication 1, **caractérisé en ce que** la détermination du point caractéristique d'amplitude de fibre optique sur la base de la première amplitude d'arrivée d'onde descendante comprend :

la réalisation (S41) d'une opération de compensation d'amplitude d'étalement sphérique sur la première amplitude d'arrivée d'onde descendante afin d'obtenir une amplitude compensée ;
la génération (S42) d'une courbe d'impédance relative sur la base de l'amplitude compensée ;
l'acquisition (S43) de données de diagraphie prédéfinies ; et
la détermination (S44) du point caractéristique d'amplitude de fibre optique correspondant sur la base des données de diagraphie prédéfinies et de la courbe d'impédance relative.

5. Procédé selon la revendication 1, **caractérisé en ce qu'**il comprend en outre :

la détermination d'un paramètre d'échantillonnage de trou de forage de la fibre optique dans le puits sur la base des informations d'étalonnage de profondeur ;
la réalisation d'une opération de rééchantillonnage de profondeur sur la base du paramètre d'échantillonnage de trou de forage afin d'obtenir des données rééchantillonnées ; et
la génération d'informations d'étalonnage de profondeur actualisées sur la base des données rééchantillonnées.

6. Dispositif pour étalonner la profondeur d'une fibre optique dans un puits, **caractérisé en ce qu'**il comprend :

une unité d'acquisition de données de champ d'ondes sismiques, utilisée pour acquérir des données de champ d'ondes sismiques de trou de forage sur la base d'un capteur d'ondes acoustiques de fibre optique ;

une première unité de détermination de temps d'arrivée, utilisée pour déterminer des premières informations de temps d'arrivée sur la base des données de champ d'ondes sismiques de trou de forage ;
une unité de détermination de première amplitude d'arrivée d'onde descendante, utilisée pour déterminer une première amplitude d'arrivée d'onde descendante sur la base des premières informations de temps d'arrivée et des données de champ d'ondes sismiques de trou de forage ;
une unité de détermination de point caractéristique, utilisée pour déterminer un point caractéristique d'amplitude de fibre optique sur la base de la première amplitude d'arrivée d'onde descendante ;
une unité de détermination de paramètres de fibre optique, utilisée pour déterminer une position initiale de tête de puits et un espacement de point de réception de la fibre optique dans le puits sur la base du point caractéristique d'amplitude de fibre optique et de points caractéristiques de courbe de diagraphie ; et
une unité d'étalonnage de profondeur, utilisée pour déterminer des informations d'étalonnage de profondeur de la fibre optique dans le puits sur la base de la position initiale de tête de puits et de l'espacement de point de réception.

7. Dispositif selon la revendication 6, **caractérisé en ce qu'**il comprend en outre une unité d'optimisation, utilisée pour :

optimiser les données de champ d'ondes sismiques de trou de forage sur la base d'un algorithme de filtrage prédéfini afin d'obtenir un champ d'ondes descendantes optimisé ;
l'unité de détermination de première amplitude d'arrivée d'onde descendante est en outre utilisée pour déterminer de première amplitude d'arrivée d'onde descendante sur la base du champ d'ondes descendantes optimisé et des premières informations de temps d'arrivée.

8. Dispositif selon la revendication 6, **caractérisé en ce que** l'unité de détermination de première amplitude d'arrivée d'onde descendante comprend :

un module de détermination de fenêtre de temps, utilisé pour déterminer une fenêtre de temps courte prédéfinie sur la base des premières informations de temps d'arrivée ;
un module de détermination de données, utilisé pour déterminer des données de champ d'ondes sismiques spécifiques dans la fenêtre de temps courte prédéfinie ; et
un module détermination de première amplitude d'arrivée, utilisé pour déterminer une première amplitude d'arrivée d'onde descendante sur la base des données de champ d'ondes sismiques.

9. Dispositif selon la revendication 6, **caractérisé en ce que** l'unité de détermination de point caractéristique comprend :

un module de compensation, utilisé pour réaliser une opération de compensation d'amplitude d'étalement sphérique sur la première amplitude d'arrivée d'onde descendante afin d'obtenir une amplitude compensée ;
un module de génération d'informations d'impédance, utilisé pour générer une courbe d'impédance relative sur la base de l'amplitude compensée ;
un module d'acquisition de données de diagraphie, utilisé pour acquérir des données de diagraphie prédéfinies ; et
un module de génération de point caractéristique, utilisé pour déterminer un point caractéristique d'amplitude de fibre optique correspondant sur la base des données de diagraphie prédéfinies et de la courbe d'impédance relative.

10. Dispositif selon la revendication 6, **caractérisé en ce qu'**il comprend en outre une unité de rééchantillonnage, utilisée pour :

déterminer un paramètre d'échantillonnage de trou de forage de la fibre optique dans le puits sur la base des informations d'étalonnage de profondeur ;
réaliser une opération de rééchantillonnage de profondeur sur la base du paramètre d'échantillonnage de trou de forage afin d'obtenir des données rééchantillonnées ; et
générer des informations d'étalonnage de profondeur actualisées sur la base des données rééchantillonnées.

11. Processeur, **caractérisé en ce qu'**il est configuré pour réaliser le procédé pour étalonner la profondeur d'une fibre optique dans un puits selon l'une quelconque des revendications 1 à 5.

12. Support de stockage lisible par ordinateur stockant un programme d'ordinateur, **caractérisé en ce que** le programme d'ordinateur, lorsqu'il est exécuté par un processeur, met en œuvre le procédé pour étalonner la profondeur d'une fibre optique dans un puits selon l'une quelconque des revendications 1 à 5.

Start

Acquiring borehole seismic wave field data based on an optical fibre acoustic wave sensor — S10

Determining first arrival time information based on the borehole seismic wave field data — S20

Determining a downgoing wave first arrival amplitude based on the first arrival time information and the borehole seismic wave field data — S30

Determining an optical fibre amplitude feature point based on the downgoing wave first arrival amplitude — S40

Determining an wellhead initial position and a receiving point spacing of the optical fibre in the well based on the optical fibre amplitude feature point and logging curve feature points — S50

Determining depth calibration information of the optical fibre in the well based on the wellhead initial position and the receiving point spacing — S60

End

FIG. 1

Start

Determining a preset short time window based on the first arrival time information — S31

Determining specific seismic wave field data within the preset short time window — S32

Determining a downgoing wave first arrival amplitude based on the specific seismic wave field data — S33

End

FIG. 2

Start

Performing a spreading amplitude
compensation operation on seismic
amplitude information to obtain a
compensated amplitude — S31

Generating a relative impedance curve
based on the compensated amplitude — S32

Acquiring preset logging data — S33

Determining a corresponding optical fibre
amplitude feature point based on the preset
logging data and the relative impedance
curve — S34

结束

FIG. 3

FIG. 4

FIG. 5

FIG. 6

| Seismic wave field data acquisition unit | First arrival time determination unit | Downgoing wave first arrival amplitude determination unit |
|---|---|---|
| Feature point determination unit | Optical fibre parameter determination unit | Depth calibration unit |

Device for calibrating the depth of an optical fibre in a well

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019004195 A1